# EUROPEAN PATENT APPLICATION

(11) **EP 1 818 826 A1**
(43) Date of publication of application: **15.08.2007**
(21) Application number: 05805493.3
(22) Date of filing: 01.11.2005
(51) Int. Cl.: G06F 9/54, H04H 1/00, H04N 5/44

(54) **APPLICATION PROGRAM EXECUTION DEVICE**

(30) Priority: 02.11.2004 JP 2004319749
(71) Applicant: MATSUSHITA ELECTRIC INDUSTRIAL CO., LTD., Osaka 571-8501 (JP)
(72) Inventor: HIRAMOTO, Takeshi, c/o Matsushita Electric Industrial Co., Ltd., Intellectual Property Rights Operations Company, Osaka-shi, Osaka 540-6319 (JP)
(74) Representative: Grünecker, Kinkeldey, Stockmair & Schwanhäusser Anwaltssozietät
(86) International application number: PCT/JP2005/020139
(87) International publication number: WO 2006/049185

(57) **Abstract**

The present invention is an application program execution apparatus for executing an application program that is executable only in a selected service, comprising: a cache unit; a selection receiving unit operable to receive a selection of a service from a user; a file receiving unit operable to receive, from an object carousel transmitted by a broadcasting apparatus, application constituent files that constitute an application program pertaining to the service selected by the user, and write the application constituent files in the cache unit; a judgment unit operable to judge whether the cache unit has cached, among the application constituent files, a file required to execute a suspend process; and an execution control unit operable to cause execution of the application constituent files cached in the cache unit if the judgment is affirmative.

## Description

### Technical Field

The present invention relates to an application program execution apparatus compliant with the DVB-MHP (Digital Video Broadcasting Multimedia Home Platform).

### Background Art

According to the DVB-MHP, a broadcasting apparatus is capable of defining multiple application programs (hereinafter referred to as the "application") and broadcasting them. On the other hand, an application program execution apparatus (the "application execution apparatus"), such as a digital TV or an STB, is capable of executing received multiple applications. An application is composed of multiple class files and multiple data files, which are multiplexed into a transport stream (the "TS") and then broadcast.

To transmit applications, an object carousel is used. The object carousel is a file system distributed in the TS, and is a means, in the DVB-MHP, for distributing files constituting an application (the "application constituent files"). The object carousel periodically transmits a hierarchical structure of respective directories and files constituting an application.
Specifically speaking, in transmitting service, the broadcasting apparatus first transmits only directories and files located immediately below Root to the application execution apparatus. Subsequently, it sequentially transmits directories and files that belong to each directory. The application execution apparatus caches these directories and files sequentially. Here, even when all application constituent files have not yet been cached (for example, when directories located below a directory including class files which correspond to the main routine has not yet been cached), the application is executed if there are minimum necessary files for the application startup. For example, if a file path to the main routine is ready in the cache, a class file corresponding to the main routine is loaded. Then, when the instance is started, the application is executed.

Note that Patent Reference 1 details the prior art of the present invention.
<Patent Reference 1> Japanese Laid-Open Patent Application No. 2000-358233
<Nonpatent Reference 1> Written Standards (file name: Ts101812.V1.2.1.pdf, document name: Digital Video Broadcasting (DVB), Multimedia Home Platform (MHP) Specification 1.0.2), p. 39, available on http://www.mhp.org/ as of September 9, 2004

### Disclosure of the Invention

### [Problems that the Invention is to Solve]

In the case where an application is operating while only part of the application constituent files have been cached in memory, a switch in service may take place according to a user's operation or an operation of the application. Problems are raised when the switch in service involves tuning from a TS transmitting the application to another TS and the new service after the switch does not allow the startup of the application.

If this type of service switch takes place, a process for ending the application is performed. Here, in the MHP specification, such ending processing can be written on an application. Accordingly, when ending an application, the application execution apparatus performs end processing of the application. It is sometimes the case that, to perform the end processing, a class file yet to be cached is required. This is, for example, when the end processing is written in an independent class file. In this situation, since the class file for the end processing has not been cached, an error is raised in the end processing.

That is, in the end processing, if part of the application in operation is the main routine, a suspend process is conducted in which local variables or the like being used by the program are stored in stack to prepare for restarting operations. However, if the class file has not been cached yet, the suspend process cannot be performed normally. In the case when the main routine has received some settings from the user, the user settings of the main routine may be lost due to the failure of the suspend process. If the user settings are lost, the user has to input the settings once again when the original service before the switch in service was made is again selected. In addition, the terminal may freeze up, or it may go down. Here, if the main routine checks, before the execution of the suspend process, whether the class file has already been cached or not, such loss of user settings, and freeze-up or unexpected shutdown of the application can be prevented. However, this raises another problem that codes for the main routine are increased, whereby resulting in taking an enormous time to load the main routine.

The present invention has been made in view of the above problems, and aims at offering an application execution apparatus that realizes stable end processing of an application while preventing prolongation of the loading period.

### [Means to Solve the Problem]

With the aim of solving the above issues, the present invention is an application program execution apparatus for executing an application program that is executable only in a selected service, comprising: a cache unit; a selection receiving unit operable to receive a selection of a service from a user; a file receiving unit operable to receive, from an object carousel transmitted by a broadcasting apparatus, application constituent files that constitute an application program pertaining to the service selected by the user, and write the application constituent files in the cache unit; a judgment unit operable to judge whether the cache unit has cached, among the application constituent files, a file required to execute a suspend process; and an execution control unit operable to cause execution of the application constituent files cached in the cache unit if the judgment is affirmative.

### [Advantageous Effects of the Invention]

According to the above structure, the application program is not executed before the cache unit caches, among the files constituting the application program pertaining to the service, the file required to execute the suspend process. Herewith, the present invention is capable of executing the suspend process normally in the end processing of the application program.

In this case, the execution control unit may include an acquisition subunit operable to acquire cache guarantee attribute information indicating whether a guarantee of no failure in file reading at the execution of the application constituent files is necessary. Here, the execution control unit controls the execution when the acquired cache guarantee attribute information indicates that the guarantee is necessary.

Herewith, the execution control unit controls the execution only when the cache guarantee attribute information indicates that a guarantee of no failure in file leading at the execution of the application program is necessary. That is, the cache guarantee attribute information allows for selecting operations appropriate for characteristics of the application program.
In this case, the execution control unit may include an acquisition subunit operable to acquire priority attribute information indicating, in a case where there are a plurality of application programs, to which application program a resource is preferentially allocated. Here, the execution control unit controls the execution when the acquired priority attribute information indicates a value of a predetermined threshold or higher.

Herewith, the execution control unit controls the execution only when the priority attribute information indicates a value of a predetermined threshold or higher. That is, the priority attribute information allows for selecting operations appropriate for characteristics of the application program.
In this case, the execution control unit may include an acquisition subunit operable to acquire service bound attribute information indicating whether the application program is executable only in the service selected by the user, and control the execution when the acquired service bound attribute information indicates the application program is executable only in the service selected by the user.

Herewith, the execution control unit controls the execution only when the service bound attribute information indicates the application program is executable only in the service. That is, the service bound attribute information allows for selecting operations appropriate for characteristics of the application program.
In this case, the judgment may be made based on information pertaining to all the application constituent files.

Herewith, it is possible to judge whether the file required to execute the suspend process has been cached.
In this case, the execution control unit may include an extraction subunit operable to extract, from the information, a directory attribute which has been assigned to each of a plurality of directories and indicates whether a directory to which the directory attribute has been assigned includes one or more of the application constituent files. Here, the required file belongs to a directory whose extracted directory attribute indicates that the directory includes one or more of the application constituent files.

Herewith, according to the directory attribute, if a file required to execute the suspend process and stored in a directory indicating that files constituting the application program are included therein is cached, the execution control unit executes the application program. Accordingly, for example, even when there are multiple applications, it is only necessary to cache the file stored in the directory indicated by the directory attribute and required to execute the suspend process, which realizes quicker startup of the application program.

The present invention is also an application program execution apparatus for executing an application program that is executable only in a selected service, comprising: a cache unit; a selection receiving unit operable to receive a selection of a service from a user; a file receiving unit operable to receive, from an object carousel transmitted by a broadcasting apparatus, application constituent files that constitute an application program pertaining to the service selected by the user, and write the application constituent files in the cache unit; and an interface unit operable to check whether the cache unit has cached, among the application constituent files, a file required to execute a suspend process. Here, when a main routine is started, the application program checks via the interface unit whether the cache unit has cached the required file, halts execution of the application constituent files until the required file is cached if a result of the check is negative, and continues the execution when the required file is cached.

Herewith, the application program is able to judge, via the interface unit, whether the cache unit has cached the file required to execute the suspend process. By halting the execution until the required file is cached, it is possible to guarantee a normal execution of the suspend process in the end processing.
The present invention is also an application program execution apparatus for executing an application program that is executable only in a predetermined service, comprising: a cache unit; a writing unit operable to read, from a recording medium, application constituent files that constitute an application program pertaining to the predetermined service, and write the application constituent files in the cache unit; a judgment unit operable to judge whether the cache unit has cached, among the application constituent files, a file required to execute a suspend process; and an execution control unit operable to cause execution of the application constituent files cached in the cache unit if the judgment is affirmative.

Herewith, even in the case where files constituting the application are read from a recording medium, the application program will not be executed before the file required to execute the suspend process is cached. Accordingly, it is possible to execute the suspend process normally in the end processing of the application program.

### Brief Description of the Drawings

FIG. 1 is a system chart;
FIG. 2 is a functional block diagram of an application execution apparatus;
FIG. 3 shows information pertaining to an application extracted from an AIT;
FIG. 4 shows a layer structure of the application execution apparatus;
FIG. 5 illustrative diagram of an object carousel;
FIG. 6 is a schematic diagram showing an example of syntax of a TS and TS packets constituting the TS;
FIG. 7 is a schematic diagram showing an example of TS including two broadcast programs;
FIG. 8 is a flowchart showing a process procedure of the application execution apparatus;
FIG. 9 is a flowchart showing an application execution control process performed by an application managing unit;
FIG. 10 shows a specific example of a file system distributed by the object carousel;
FIG. 11 is a functional diagram of an application execution apparatus of Embodiment 2;
FIG. 12 shows a specific example in which Cache Guarantee Attribute CG is added to the DVB-MHP standard;
FIG. 13 is a flowchart showing a process procedure of the application execution apparatus of Embodiment 2;
FIG. 14 is a flowchart showing an application execution process performed by an application managing unit;
FIG. 15 is a functional block diagram of an application execution apparatus of Embodiment 3;
FIG. 16 shows a specific example in which Multi-Directory Attribute CG is added to the DVB-MHP standard;
FIG. 17 is a flowchart showing a process procedure of the application execution apparatus of Embodiment 3;
FIG. 18 is a flowchart showing an application execution control process 2 performed by an application managing unit;
FIG. 19 is a functional block diagram of an application execution apparatus of Embodiment 4;
FIG. 20 shows a specific example in which Cache Guarantee Attribute and Multi-Carousel Attribute are added to the DVB-MHP standards;
FIG. 21 shows an example of original application_descriptor defined in an AIT in accordance with the DVB-MHP standard;
FIG. 22 is a flowchart showing a process procedure of the application execution apparatus of Embodiment 4;
FIG. 23 is a flowchart of an application execution control process 3 of an application managing unit;
FIG. 24 is a specific example in which a file system is divided up and distributed by two object carousels; and
FIG. 25 is a flowchart of execution control performed by a main routine.

### Explanation of References

- 10: application execution apparatus
- 10a: application execution apparatus
- 10b: application execution apparatus
- 10c: application execution apparatus
- 20: broadcasting apparatus
- 101: service reception unit
- 102: receiving unit
- 103: demultiplexing unit
- 104: application managing unit
- 104a: application managing unit
- 104b: application managing unit
- 104c: application managing unit
- 105: application control unit
- 105a: application control unit
- 105b: application control unit
- 105c: application control unit
- 106: cache completion monitoring unit
- 106b: directory-based cache completion monitoring unit
- 106c: cache completion monitoring unit
- 107: carousel storing unit
- 107c: carousel storing unit
- 108: application executing unit
- 109: decoding unit
- 110: output unit
- 401: Java^{®} platform
- 402: Java^{®} I/O
- 403: DSM-CC
- 404: decoder
- 405: application manager
- 406: Java® virtual machine
- 407: class loader
- 408: heap area
- 409: thread unit
- 410: carousel receiving unit
- 1101: cache guarantee attribute extracting unit
- 1501: multi-directory attribute extracting unit
- 1901: multi-carousel attribute extracting unit
- 1902: carousel storing unit
- 1903: cache completion monitoring unit

### Best Mode for Carrying Out the Invention

The following describes embodiments of the present invention with reference to drawings.

### EMBODIMENT 1

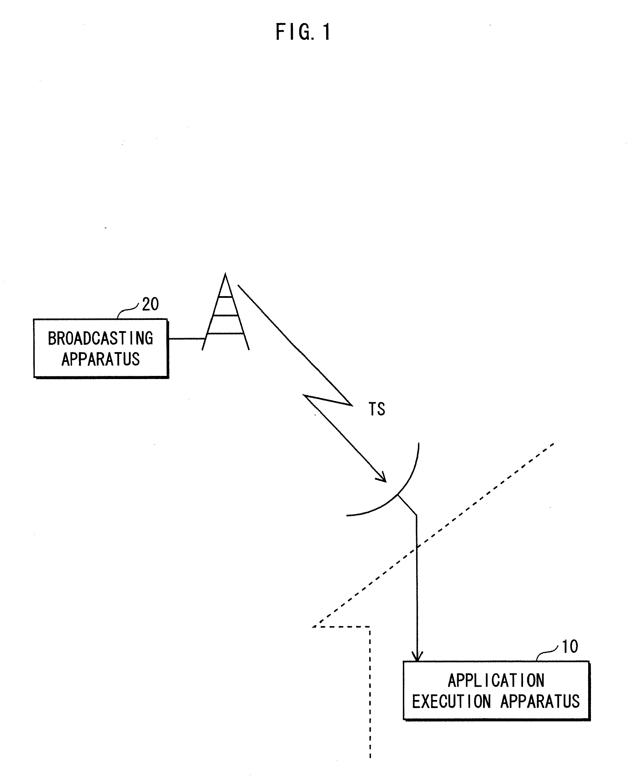

An embodiment of an application execution apparatus of the present invention is explained here. First, a usage application is described in relation to the implementation of the application execution apparatus of the present invention. The application execution apparatus of the present embodiment is used by a user in a digital broadcasting system as shown in FIG. 1. The digital broadcasting system of FIG. 1 is based on a conventional digital broadcasting system compliant with digital broadcasting standards that is represented by the DVB-MHP, and comprises an application execution apparatus 10 and a broadcasting apparatus 20.

The broadcasting apparatus 20 broadcasts a TS in MPEG2 (Motion Picture Experts Group phase 2) using broadcast channels. Into the TS, components of a broadcast program are multiplexed. The broadcast program includes at least one application as its component, and in general also includes video data and audio data as the components. The application is made up of multiple class files and multiple data files. An object carousel is used to transmit the application.

The application execution apparatus 10 executes each application demultiplexed from a TS, which has been received from the broadcasting apparatus 20. In general, the application execution apparatus 10 also plays back video and audio data and outputs them.
Thus completes the description of the usage application of the application execution apparatus 10. Next, a production application of the application execution apparatus 10 is described.

### <Structure>

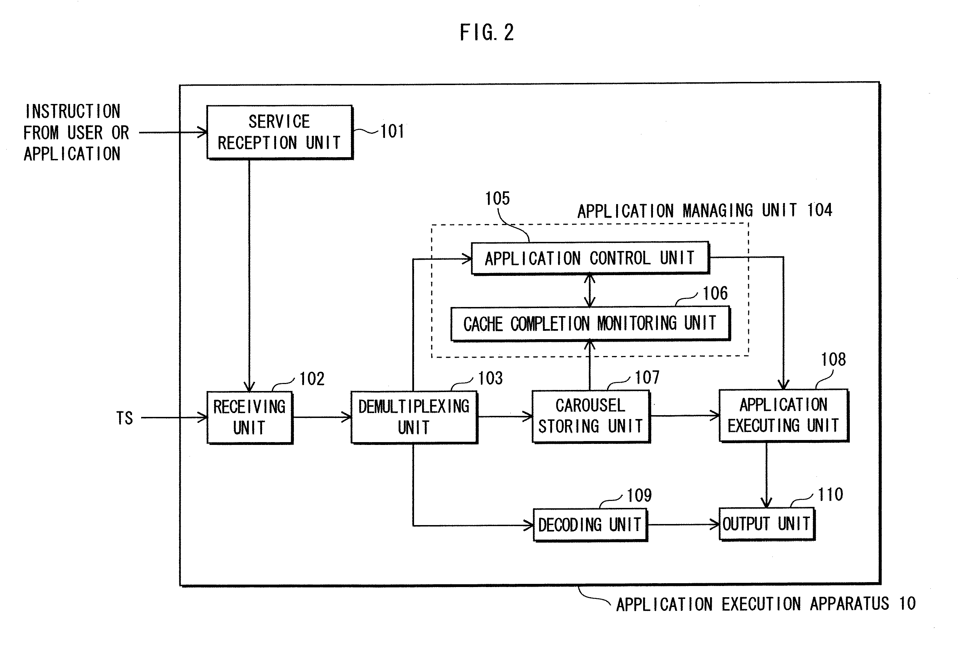

FIG. 2 is a functional block diagram showing a structure of the application execution apparatus 10. The application execution apparatus 10 comprises as shown in FIG. 2: a service reception unit 101; a receiving unit 102; a demultiplexing unit 103; an application managing unit 104; a carousel storing unit 107; an application executing unit 108; a decoding unit 109; and an output unit 110.

The service reception unit 101 manages service selections. Specifically speaking, the service reception unit 101 receives a request for changing a service made by a user's instruction via a signal of the remote controller, or by an instruction of the application, and then notifies the-receiving unit 102 of the request.
The receiving unit 102 receives, via an antenna or a cable, a signal in the frequency of the TS's carrier in which the selected service is carried on, and demodulates the TS. Then, the receiving unit 102 transmits the demodulated TS to the demultiplexing unit 103. Here, if the application execution apparatus is one obtaining the signal from a digital line, the demodulation function is omitted.

When receiving the TS transmitted from the receiving unit 102, the demultiplexing unit 103 demultiplexes the TS into video/audio data, an object carousel, and an AIT (Application Information Table) which is information pertaining to application control. Then, the demultiplexing unit 103 provides the video/audio data, the object carousel, and the AIT to the decoding unit 109, the carousel storing unit 107, and the application control unit 105, respectively.

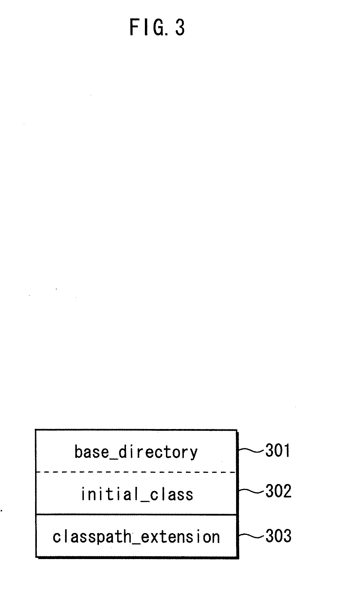

The application management unit 104 manages the lifecycle of an application. The application managing unit 104 comprises an application control unit 105 and a cache completion monitoring unit 106.
The application control unit 105 extracts, from the AIT, information of an application to be started in the service notified by the service reception unit 101. In addition, after receiving a cache completion notification from the cache completion monitoring unit 106, the application control unit 105 gives an instruction for starting the application execution to the application executing unit 108. The application control unit 105 sends the extracted application information to the cache completion monitoring unit 106. Here, specifically speaking, the application information extracted from the AIT is made up of, as shown in FIG. 3: base_directory 301; initial_class 302; and classpath_extension 303.

base_directory 301 is a directory in which the main routine of the application is stored. base_directory 301 is considered to automatically form a first directory on the class path.
initial_class 302 is information to be paired with base_directory 301, and indicates a name of a class file to be first started.

classpath_extension 303 indicates class files other than the main routine.
The cache completion monitoring unit 106 judges whether all application constituent files have been cached. When the judgment is affirmative, the cache completion monitoring unit 106 notifies the application control unit 105 of the cache completion.
The carousel storing unit 107 caches an object carousel for the application corresponding to the selected service in a manner that the object carousel can be referred to as a file system. Then, in response to a request for reading a file from the application executing unit 108, the carousel storing unit 107 provides the file. Specifically speaking, "to cache" here means to store something in a storage device, such as memory.

The application executing unit 108 reads, from the carousel storing unit 107, application constituent files indicated by the application control unit 105, and then interprets and executes them when receiving an instruction of starting the execution. The application executing unit 108 is, specifically speaking, a Java® virtual machine compliant with the DVB-MHP.
The decoding unit 109 receives video/audio data from the demultiplexing unit 103 and decodes this.

The output unit 110 outputs the decoded video/audio data as well as graphics sent from the application executing unit 108.

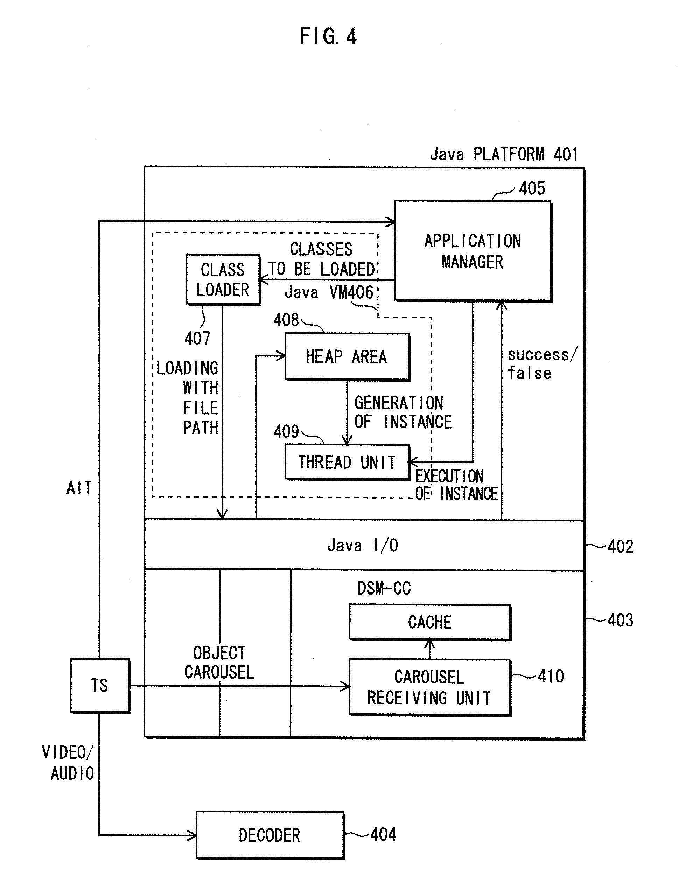

FIG. 4 shows a detailed layer structure of a hardware platform, which is one example of actual implementation of the structure shown in the functional block diagram of the application execution apparatus 10. As shown in the figure, the application execution apparatus 10 is made up of a Java® platform 401, a Java® I/O 402, a DSM-CC (Digital Storage Media Command and Control) 403, and a decoder 404.

The Java® platform 401 includes a Java® virtual machine 406 and an application manager 405. The Java® virtual machine 406 converts a Java® object written in Java® language into a native code of the CPU of the application execution apparatus 10, and causes the CPU to execute the code. To be more precise, the Java^{®} virtual machine 406 loads xlet programs, which are constituents of the application, into the heap area, decrypts the xlet programs, and performs control in accordance with the decode results.

The Java® virtual machine 406 is made up of a class loader 407, a heap area 408, and a thread unit 409.
The class loader 407 reads class files from the DSM-CC 403 out to the heap area 408. Readout of class files by the class loader 407 is achieved using a file path. If the file path indicates the DSM-CC403, the class loader 407 reads class files from the DSM-CC 403 out to the heap area 408.

In the heap area 408, instances of various class files are stored. These instances are xlet programs constituting an application. When these xlet programs are placed in the heap area 408, the application becomes executable.
The thread unit 409 is a logical execution entity that executes instances stored in the heap area 408.

The application manager 405 instructs the class loader 407 to load classes. The application manager 405 also judges whether the Java^{®} I/O 402 has returned a SUCCESS response with respect to each of all the application constituent files. In the case where a SUCCESS response has been obtained for all files, the application manager 405 instructs the thread unit 409 to start the application execution. Here, all the files, for each of which a SUCCESS response has been returned, may include a file for which a SUCCESS response has been returned as a result of the file being loaded again after a FALSE response was once returned. The judgment of whether a SUCCESS response has been returned for all the files is made based on the application information extracted from the AIT.

The Java® I/O 402 returns, to the application manager 405, a SUCCESS or a FALSE response for the load of each class file from the class loader 407. Specifically speaking, when receiving from the class loader 407 a load instruction with a file path specification, the Java® I/O 402 judges whether a specified class file has been cached in the DSM-CC 403. When the specified class file has been cached, the Java® I/O 402 loads the class file into the heap area 408, and then sends a SUCCESS response to the application manager 405. On the other hand, the Java^{®} I/O 402 sends a FALSE response to the application manager 405 when the class file has not been cached.

The DSM-CC 403 manages caching of class files.
The carousel receiving unit 410 receives and caches an object carousel.
The decoder 404 decodes video/audio data.

### <Data>

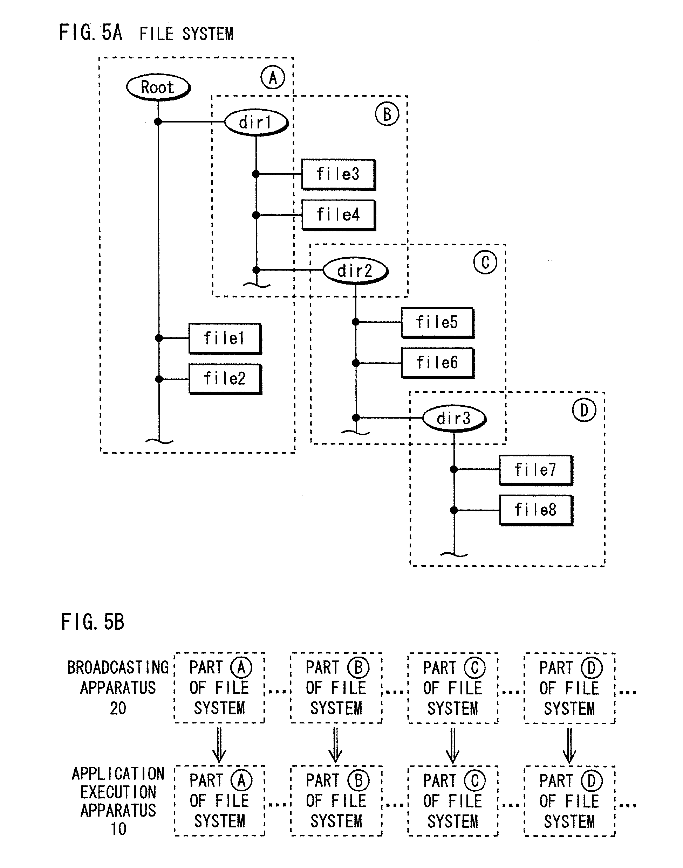

FIG. 5A and 5B show a method of an object carousel to transmit application constituent files. FIG. 5A shows a file system transmitted from the broadcasting apparatus 20. FIG. 5B shows that part of the file system is being transmitted from the broadcasting apparatus 20 to the application execution apparatus 10. As shown in FIG. 5B, the entire file system is not transmitted at one time, but the transmission is made periodically and repeatedly on a layer-to-layer basis. That is, the application execution apparatus 10 restores files by obtaining files for one cycle starting from any point of time and expanding those files in memory of the application execution apparatus 10.

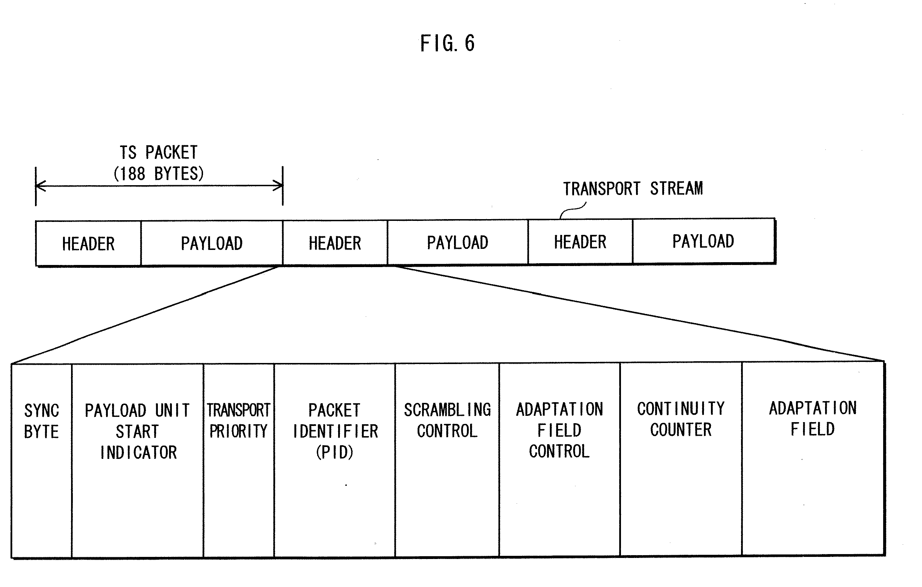

FIG. 6 is a schematic diagram showing an example of syntax of a TS and TS packets constituting the TS. The TS is made up of a large number of TS packets, each of which is 188 bytes. Each TS packet includes a header which provides information pertaining to the TS packet and a payload in which actual data is recorded.
A header is composed of: a sync byte; a payload unit start indicator; transport priority; a packet identifier (PID); scrambling control; adaptation field control; a continuity counter; and an adaptation field. A predetermined bit(s) is allotted to each of these components, providing information pertaining to the TS packet.

A payload includes packeted audio/video data and service data. Each packet of audio/video data and service data is identified by a packet identifier. The audio/video data and service data are multiplexed into a TS with respect to each packet, and transmitted from the broadcasting apparatus 20 to the application execution apparatus 10.

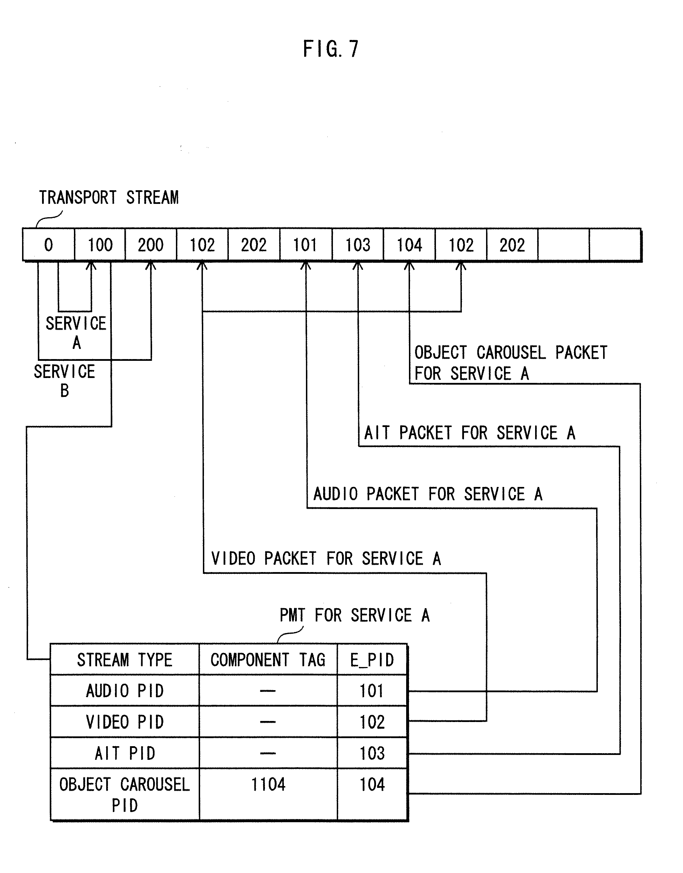

FIG. 7 is a schematic diagram showing an example of TS which includes two broadcast programs, Service A and Service B. Here, assume that for each broadcast program, one set of audio data and video data, an AIT which is information pertaining to control of an application, and an object carousel including application constituent files are multiplexed together and transmitted. A broadcast program included in the TS is expressed by a TS packet that distributs a table called PMT (Program Map Table). PID of this TS packet is shown in a TS packet, which distributes a table called a PAT (Program Association Table) , and whose PID is "0". The PMT stores therein PIDs for videos, audios, an AIT and the like included in a service. With the PIDs, types of TS packets are identified. By referring to the PMT, only TS packets making up a targeted program can be taken out from the stream. Collecting these packets having the PIDs enables original videos to be played back.

According to the example of FIG. 7, a PID of Service A is 100 while a PID of Service B is 200. In addition, the PMT includes a PID for each of the audio data, video data, AIT, and object carousel distributing a file system which includes application constituent files. Here, as to Service A, the audio data, video data, AIT, and object carousel are distributed in TS packets having PIDs of 101, 102, 103, and 104, respectively. A component tag of the object carousel is 1104. The AIT includes information necessary to control the application, such as control instructions for starting and stopping the application, a component tag of the object carousel that distributes the application (link information to derive a PID of the object carousel), and a file path first used to start the application. The application execution apparatus 10 controls the application basically in accordance with the AIT included in the program information being played back.

### <operations>

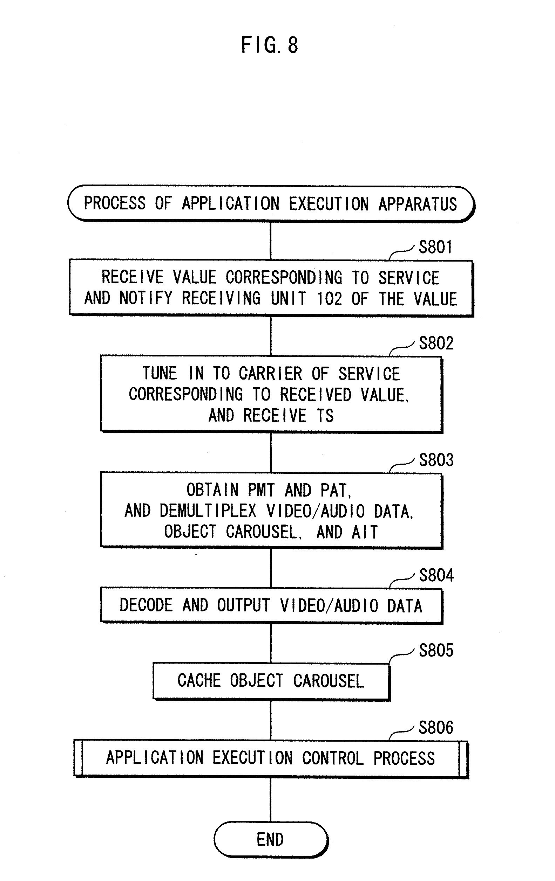

The following describes process operations of the application execution apparatus 10. FIG. 8 is a flowchart showing a process procedure of the application execution apparatus 10. First, the service reception unit 101 receives a value corresponding to a service that is specified by a user's operation on the remote controller, a request from the application, or the initial setting at the time when the power is turned on, and notifies the receiving unit 102 of this (5801) . The receiving unit 102 tunes in to a carrier of the service corresponding to the received value, receives a TS, and then demodulates the received TS into digital data (S802). The demultiplexing unit 103 obtains the PMT and PAT multiplexed into the TS, identifies the video/audio data, object carousel and AIT using PIDs stored in the PMT, and demultiplexes these (S803). The decoding unit 109 decodes the video/audio data demultiplexed by the demultiplexing unit 103, and the output unit 110 outputs the data decoded by the decoding unit 109 (5804). The carousel storing unit 107 caches an object carousel pertaining to an application which is a startup target for the selected service (S805). The application managing unit 104 performs an application execution control process (S806).

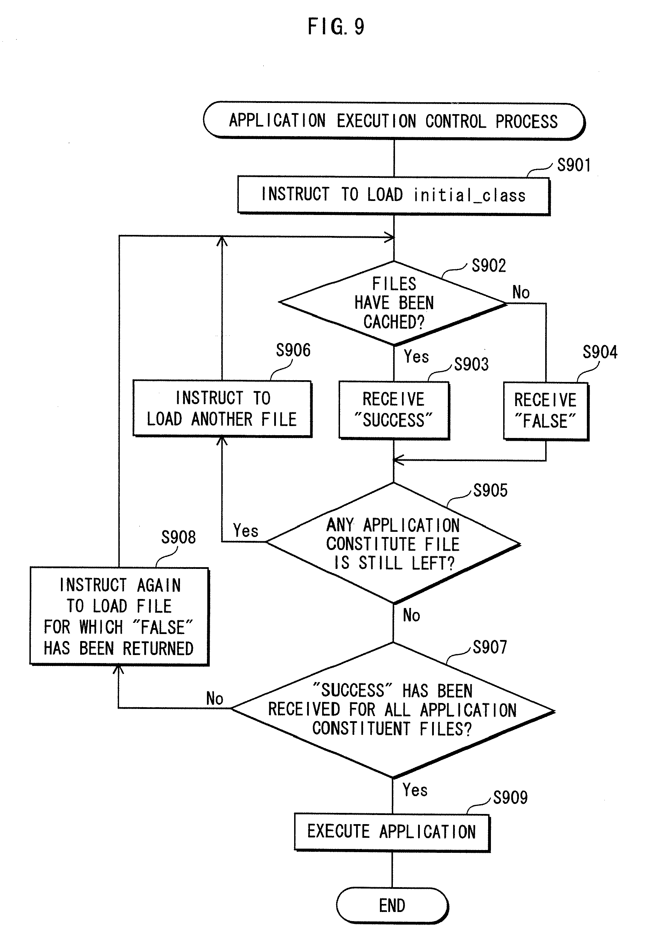

FIG. 9 is a flowchart of the application execution control process performed by the application managing unit 104. The application managing unit 104 instructs the application executing unit 108 to load a class file corresponding to initial_class 302, which is application information extracted from the AIT (5901). It is judged whether a file to be loaded is present in the carousel storing unit 107 (S902). When the judgment is affirmative, the class file corresponding to initial_class 302 is read to the application executing unit 108, and the application managing unit 104 receives a SUCCESS response from the Java^{®} I/O (S903). In the case when the judgment is negative, the application managing unit 104 receives a FALSE response from the Java® I/O (S904). The application managing unit 104 judges whether any other class file pertaining to the application is present (S905). Specifically speaking, the judgment is made based on base_directory 301 and classpath_extension 303 that are application information extracted from the AIT. When the judgment is affirmative, the application management unit 104 instructs the application executing unit 108 to load application constituent files indicated by base_directory 301 or classpath_extension 303 (S906), and then moves to Step S902. When the judgment is negative, the application managing unit 104 judges whether to have received a SUCCESS response with respect to all class files of the application (S907). Here, when the judgment is negative, the application managing unit 104 once again issues an instruction for loading a class file for which a FALSE response has been returned (S908). On the other hand, when the judgment is affirmative, the application managing unit 104 instructs the application executing unit 108 to start the application execution. In response to the instruction for starting the application execution, the application executing unit 108 interprets and executes the loaded class files (S909).

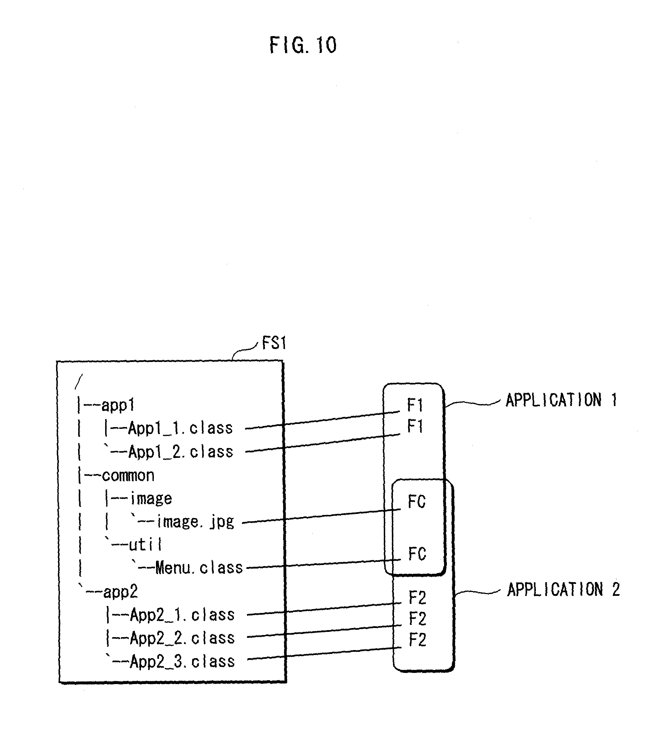

FIG. 10 is a specific example of File System FS1 to be distributed by an object carousel. File System FS1 includes two applications: Application 1 and Application 2. Application 1 is composed of File F1 and File FC; while Application 2 is composed of File F2 and File FC. In the case when an application of the startup target is Application 1, the application control unit 105 instructs the application executing unit 108 to start the application execution after receiving a cache completion notification from the cache completion monitoring unit 106. Since having cached all files shown in File System FS1, the carousel storing unit 107 becomes able to respond to a request of the application executing unit 108 for reading files without performing a cache process of the files. Therefore, it is possible to guarantee reading of the files even when the application executing unit 108 falls into a state of not being able to receive data from the receiving unit 102.

Thus, according to the present embodiment, the application control unit 105 issues an instruction for starting the application execution to the application executing unit 108 after receiving a cache completion notification from the cache completion monitoring unit 106. This prevents the application from operating when the application constituent files have yet to be cached, ensuring stable operations in the end processing of the application.
In addition, it is sometimes the case that an application operations while part of application constituent files have been cached in memory, and then the application, or a different application performs Tuning API during the operation. Even in such a case, the end processing of the application can be ensured by executing the application after the cache completion notification from the cache completion monitoring unit 106 is received, as described above.

Additionally, in the case when an application operates while part of application constituent files have been cached in memory, a TS may become impossible to be received as a result that reception performance deteriorates due to, for example, the cable being pulled out during the operation. Even in such a case, the end processing of the application can be ensured by executing the application after the cache completion notification from the cache completion monitoring unit 106 is received, as described above.

### EMBODIMENT 2

Embodiment 1 ensures no failure in the file reading at the execution of an application, even if a TS is changed later, by starting the application after all application constituent files on the file system have been cached in the application execution apparatus 10. However, there are some applications that require no guarantee of file reading, and it is more preferable if the time taken for the startup is shortened. Given this factor, the present embodiment takes a different process for each application according to its characteristics.

According to the present embodiment, the broadcast program in the digital broadcasting system of FIG. 1 further includes, as its component, an attribute indicating whether to require a guarantee of no failure in file reading at the application execution (hereinafter, referred to as the "cache guarantee attribute"), in addition to the components shown in Embodiment 1.

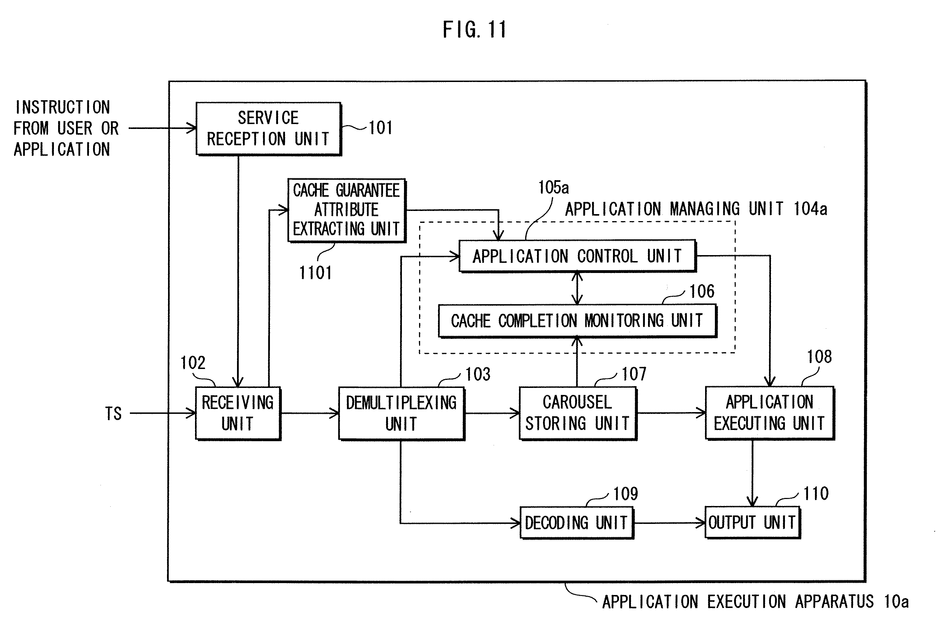

FIG. 11 shows a functional block diagram of the application execution apparatus 10a according to the present embodiment. As shown in FIG. 11, the application execution apparatus 10a has a structure in which a cache guarantee attribute extracting unit 1101 is added to the application execution apparatus 10 of Embodiment 1.

The cache guarantee attribute extracting unit 1101 extracts a cache guarantee attribute from an AIT, which is information pertaining to application control in a TS, and offers it to the application control unit 105a.
The application control unit 105a of the present embodiment extracts information of an application to be started from the AIT of the service specified by the service reception unit 101. The application control unit 105a also transmits the extracted application information to the cache completion monitoring unit 106. When receiving a cache guarantee attribute of the application from the cache guarantee attribute extracting unit 1101, the application control unit 105a judges whether the cache guarantee attribute is an attribute indicating the necessity of a guarantee of no failure in file reading. When the judgment result is affirmative, the application control unit 105a performs authentication of the application and gives an instruction for starting the application execution after receiving a cache completion notification from the cache completion monitoring unit 106. When the judgment result is negative, the application control unit 105a gives an instruction for starting the application execution to the application executing unit 108 without waiting for a cache completion notification sent from the cache completion monitoring unit 106.

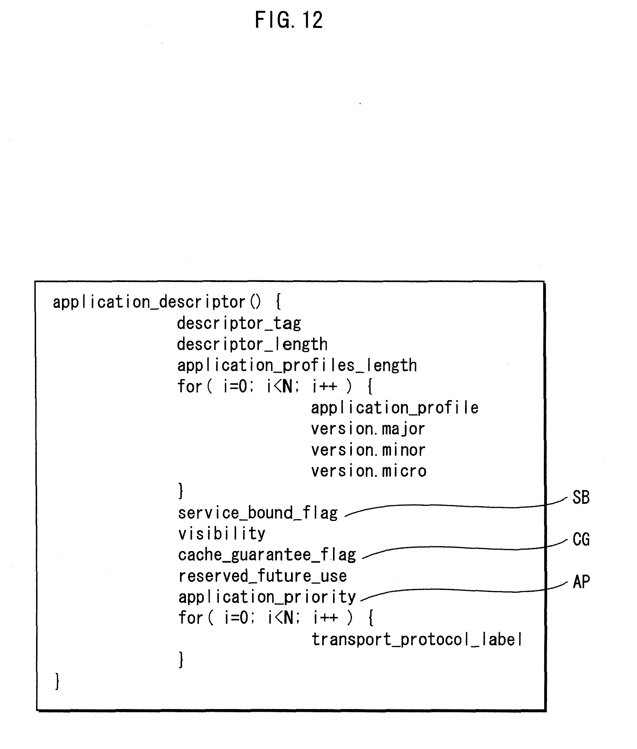

FIG. 12 shows a specific example in which Cache Guarantee Attribute CG is added to the DVB-MHP standard. As shown in FIG. 12, in an AIT of the DVB-MHP, Cache Guarantee Attribute CG is added thereto as cache_guarantee_flag field of application_descriptor defined in the AIT.

### <Operations>

The following describes operations of the application execution apparatus 10a of the present embodiment.

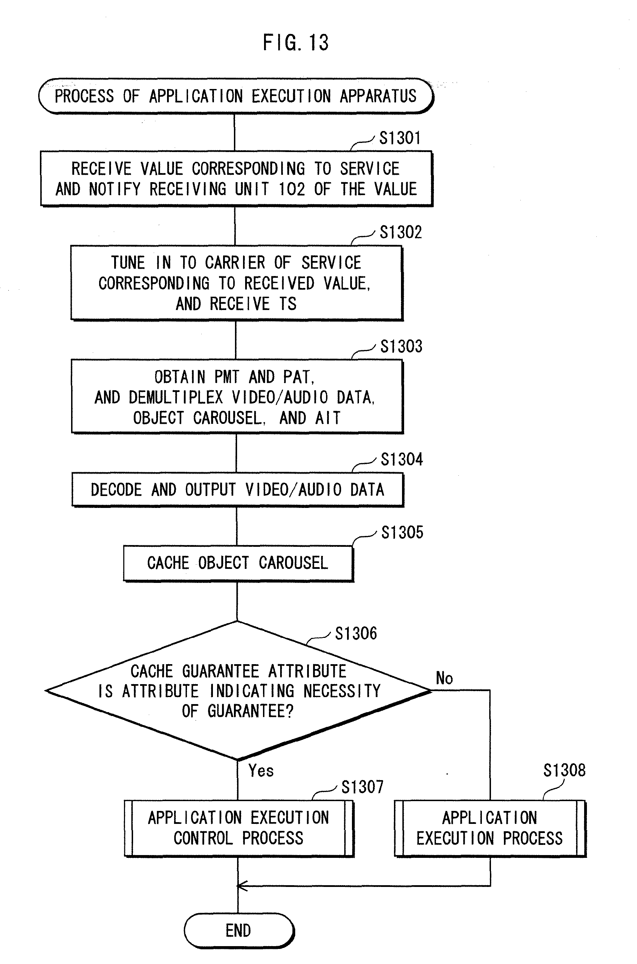

FIG. 13 is a flowchart showing a process procedure of the application execution apparatus 10a. First, the service reception unit 101 receives a value corresponding to a service that is specified by a user's operation on the remote controller, a request from the application, or the initial setting at the time when the power is turned on, and notifies the receiving unit 102 of this (S1301) . The receiving unit 102 tunes in to a carrier of the service corresponding to the received value, receives a TS, and then demodulates the received TS into digital data (S1302) . The demultiplexing unit 103 obtains the PMT and PAT multiplexed into the TS, identifies the video/audio data, object carousel and AIT using PIDs stored in the PMT, and demultiplexes these (S1303) . The decoding unit 109 decodes the video/audio data, and the output unit 110 outputs the decoded data (S1304) . The carousel storing unit 107 caches an object carousel pertaining to an application which is a startup target for the selected service (S1305). The application managing unit 104a receives a cache guarantee attribute from the cache guarantee attribute extracting unit 1101, and then judges whether the cache guarantee attribute is an attribute indicating the necessity of a guarantee of no failure in file reading (S1306) . When the judgment is affirmative, the application managing unit 104a performs the application execution control process of FIG. 9 (S1307) . When the judgment is negative, the application managing unit 104a performs the application execution process (S1308).

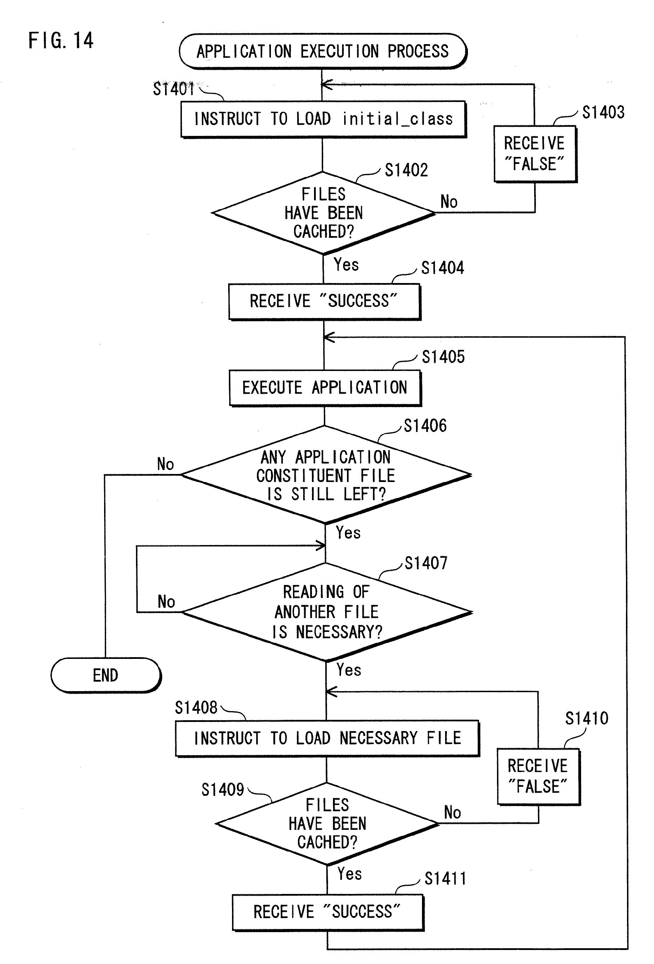

FIG. 14 is a flowchart of the application execution process performed by the application managing unit 104a. The application managing unit 104a instructs the application executing unit 108 to load a class file corresponding to initial_class 302, which is application information extracted from the AIT (S1401) . It is judged whether a file to be loaded is present in the carousel storing unit 107 (S1402). When the judgment is affirmative, the class file corresponding to initial_class 302 is read to the application executing unit 108, and the application managing unit 104a receives a SUCCESS response from the Java® I/O (S1404). Then, the application managing unit 104a gives an instruction for starting the execution to the application executing unit 108. The application executing unit 108 instructed by the application managing unit 104a to start the application execution interprets the loaded class file and executes it (S1405) . When the judgment is negative, the application managing unit 104a receives a FALSE response from the Java^{®} I/O (S1403), and then moves to S1401. The application managing unit 104a judges whether any other class file pertaining to the application is present (S1406). Specifically speaking, the judgment is made based on base_directory 301 and classpath_extension 303 that are application information extracted from the AIT. When the judgment is negative, the application managing unit 104a ends the process. When the judgment is affirmative, the application managing unit 104a judges the necessity of reading another file (S1407). Here, when the judgment is affirmative, the application managing unit 104a gives an instruction for loading a necessary file (S1408). Then, a judgment is made on whether the targeted file for loading is present in the carousel storing unit 107 (S1409) . When the judgment is affirmative, the class file is read to the application executing unit 108, and the application managing unit 104a receives a SUCCESS response from the Java® I/O (S1411) . Then, the application executing unit 108 executes the read class file (S1405). When the judgment is negative, the application managing unit 104a receives a FALSE response from the Java® I/O (S1410), and then moves to S1408. Thus in the application execution process, the application managing unit 104a gives an instruction for starting the application execution to the application executing unit 108 without waiting for a cache completion notification. Then, the application executing unit 108 instructed by the application managing unit 104a to start the application execution reads a class file to be first executed, and then interprets and executes the class file. In addition, the application executing unit 108 reads other files constituting the application each time when they becomes necessary in the interpretation/execution processes, and interprets and executes the read class files.

The following explanation is given with reference to FIG. 10. In the specific example of the file system FS1 distributed by the object carousel of FIG. 10, if an application of the startup target is Application 1 and the cache guarantee attribute is an attribute indicating the necessity of a guarantee of no failure in file reading, the same process as in Embodiment 1 is performed. That is, the application control unit 105a sends an instruction for starting the execution to the application executing unit 108 after receiving a cache completion notification from the cache completion monitoring unit 106. Accordingly, the carousel storing unit 107 becomes able to respond to a request for reading files without performing a cache process of the files. Therefore, it is possible to ensure reading of files even when the application executing unit 108 falls into a state of not being able to receive data from the receiving unit 102.

On the other hand, in the case where an application of the startup target is Application 1 and the cache guarantee attribute is not an attribute indicating the necessity of a guarantee of no failure in file reading, the application control unit 105a gives an instruction for starting the application to the application executing unit 108 without waiting for a cache completion notification from the cache completion monitoring unit 106. Therefore, the carousel storing unit 107 responds to a request from the application executing unit 108 for reading files as well as possible, while caching yet-to-be cached files during the time when no file reading requests are made. Accordingly, the startup of the application is made quicker than in the case of waiting for all files to be cached.

Thus, according to the present embodiment, the cache guarantee attribute enables a selection of the startup method to be made in accordance with whether the application is one requiring a guarantee of no failure in file reading or one requiring no guarantee of the same and desirably having priority on the startup speed and the memory efficiency.
Note that, in the present embodiment, the cache guarantee attribute is added as a new attribute included in the AIT and used; however, the present invention is not limited to this. For example, Priority Attribute AP that is an existing attribute in the AIT of FIG. 12, or Service Bound Attribute SB may be used instead. Priority Attribute AP is an attribute indicating, in the case where there are multiple applications, to which application the resources are preferentially allocated. Service Bound Attribute SB is an attribute indicating whether the application is a service bound. In the case where the application is a service bound, the application is ended when the current service is switched to another. For instance, when a priority attribute is used, the application control unit 105a judges whether the priority information is at a predetermined threshold or higher. Then, the application control unit 105a may give an instruction for the execution after receiving a cache completion notification from the cache completion monitoring unit 106 when the judgment is affirmative.

When a service bound attribute is used, the application control unit 105a judges whether the service bound attribute is a service bound. Then, when the judgment is affirmative, the application control unit 105a may give an instruction for the execution after receiving a cache completion notification from the cache completion monitoring unit 106. Herewith, even if a switch is made to a service which involves tuning and to which the startup of the application is not allowed during the operation of a service bound application while part of application constituent files have been cached in memory, the end processing of the application can be performed normally when the application is to be ended after the switch in service.

### EMBODIMENT 3

In the case where files constituting multiple applications are present on the file system, Embodiment 1 gives a start instruction after all files have been cached. However, there is sometimes the case that, only one of the multiple applications on the file system is a startup target, for example. In such a case, waiting for the completion of all files of the multiple applications to be cached is inefficient. Given this factor, in the present embodiment, an identifier is provided to files constituting a single application so as to differentiate these files from other files. Then, with files that are distributed in a of having been divided and assigned to multiple directories, the application execution apparatus gives an instruction for starting the execution after files necessary to execute one application have been cached.

According to the present embodiment, in the digital broadcasting system of FIG. 1, application constituent files are distributed after having been divided and assigned to multiple directories. The broadcast program further includes, as its component, an attribute indicating directories that include files constituting one application (hereinafter, referred to as the "multi-directory attribute"), in addition to the components shown in Embodiment 2.

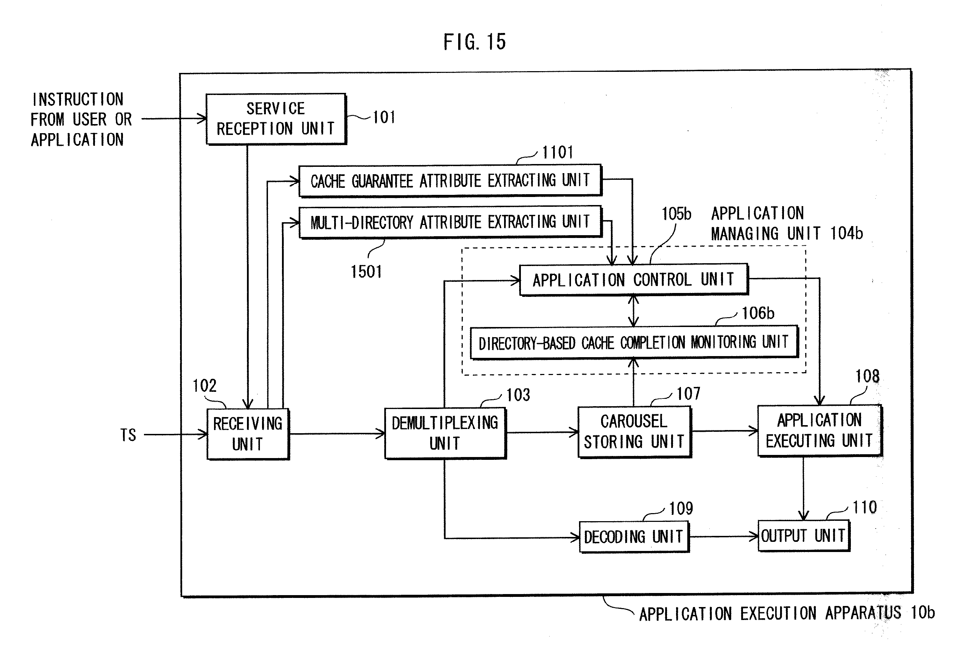

In FIG. 15, an application execution apparatus 10b has a structure in which a multi-directory attribute extraction unit 1501, along with a directory-based cache completion monitoring unit 106b in place of the cache completion monitoring unit 106, is added to the application execution apparatus 10a of Embodiment 2.

The multi-directory attribute extracting unit 1501 extracts a multi-directory attribute from an AIT, which is information pertaining to application control in a TS, and offers it to the application control unit 105b.
The directory-based cache completion monitoring unit 106b judges whether all of the application constituent files included in the directories shown by the multi-directory attribute have been cached. If the judgment is affirmative, the directory-based cache completion monitoring unit 106b notifies the application control unit 105b of the cache completion.

The application control unit 105b of the present embodiment extracts information of an application to be started up from the AIT of the service specified by the service reception unit 101. When receiving a cache guarantee attribute of the application from the cache guarantee attribute extracting unit 1101, the application control unit 105b judges whether the cache guarantee attribute is an attribute indicating the necessity of a guarantee of no failure in file reading. When the judgment result is affirmative, the application control unit 105b performs authentication of the application and gives an instruction for starting the application execution after receiving a cache completion notification from the directory-based cache completion monitoring unit 106b. When the judgment result is negative, the application control unit 105b gives an instruction for starting the application execution to the application executing unit 108 without waiting for a cache completion notification sent from the directory-based cache completion monitoring unit 106b. The application control unit 105b also sends the extracted application information to the directory-based cache completion monitoring unit 106b.

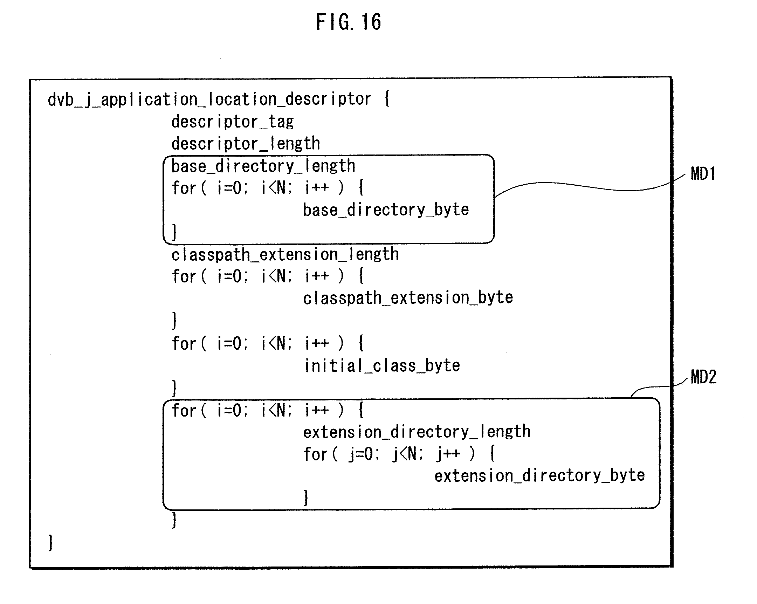

FIG. 16 shows a specific example in which the multi-directory attribute unique to the present embodiment is applied to the DVB-MHP standard. As shown in FIG. 16, in an AIT of the DVB-MHP, Multi-Directory Attribute MD1 is a conversion of an existing base_directory field in application_descriptor defined in the AIT while Multi-Directory Attribute MD2 is newly added to application_descriptor as an extension_directory field. Here, Multi-Directory Attribute MD1 shows a path of a directory tree including, among the application constituent files, a file to be used first at the start of the application. On the other hand, Multi-Directory Attribute MD2 shows a path of a directory tree including application constituent files other than those included in the directory tree indicated by Multi-Directory Attribute MD1.

### <Operations>

The following describes operations of the application execution apparatus 10b of the present embodiment.

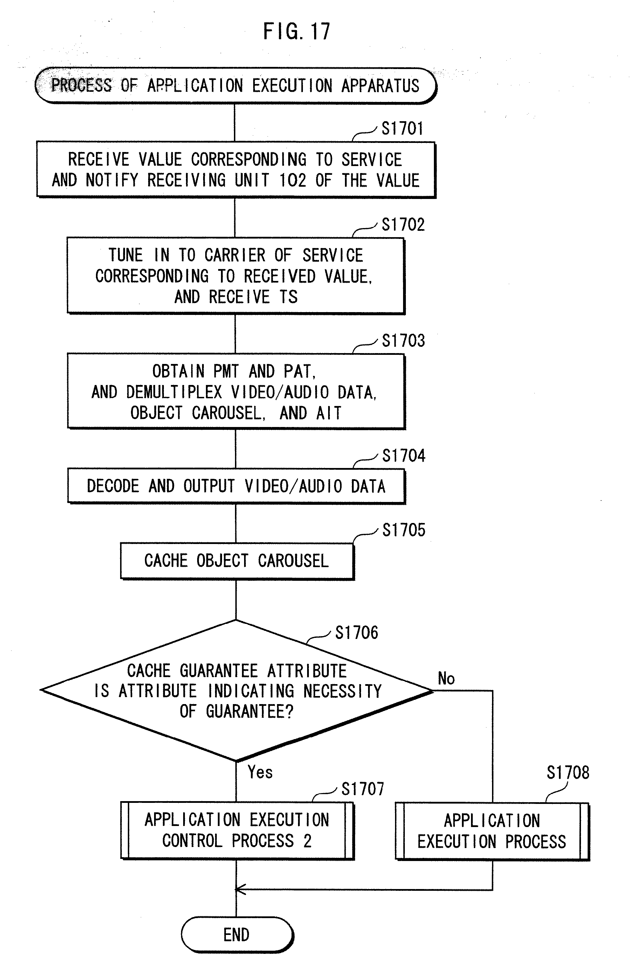

FIG. 17 is a flowchart showing a process procedure of the application execution apparatus 10b. First, the service reception unit 101 receives a value corresponding to a service that is specified by a user's operation on the remote controller, a request from the application, or the initial setting at the time when the power is turned on, and notifies the receiving unit 102 of this (S1701) . The receiving unit 102 tunes in to a carrier of the service corresponding to the received value, receives a TS, and then demodulates the received TS into digital data (S1702). The demultiplexing unit 103 obtains the PMT and PAT multiplexed into the TS, identifies the video/audio data, object carousel and AIT using PIDs stored in the PMT, and demultiplexes these (S1703). The decoding unit 109 decodes the video/audio data, and the output unit 110 outputs the decoded data (S1704). The carousel storing unit 107 caches an object carousel pertaining to an application which is a startup target for the selected service (S1705). The application managing unit 104b receives a cache guarantee attribute and a multi-directory attribute from the cache guarantee attribute extracting unit 1101 and the multi-directory attribute extracting unit 1501, respectively, and then judges whether the cache guarantee attribute is an attribute indicating the necessity of a guarantee (S1706). When the judgment is affirmative, the application managing unit 104b performs an application execution control process 2 (S1707). When the judgment is negative, the application managing unit 104b performs the application execution process of FIG. 14 (S1708). That is, the application control unit 105b gives an instruction for starting the application to the application executing unit 108 without waiting for a cache completion notification sent from the directory-based cache completion monitoring unit 106b.

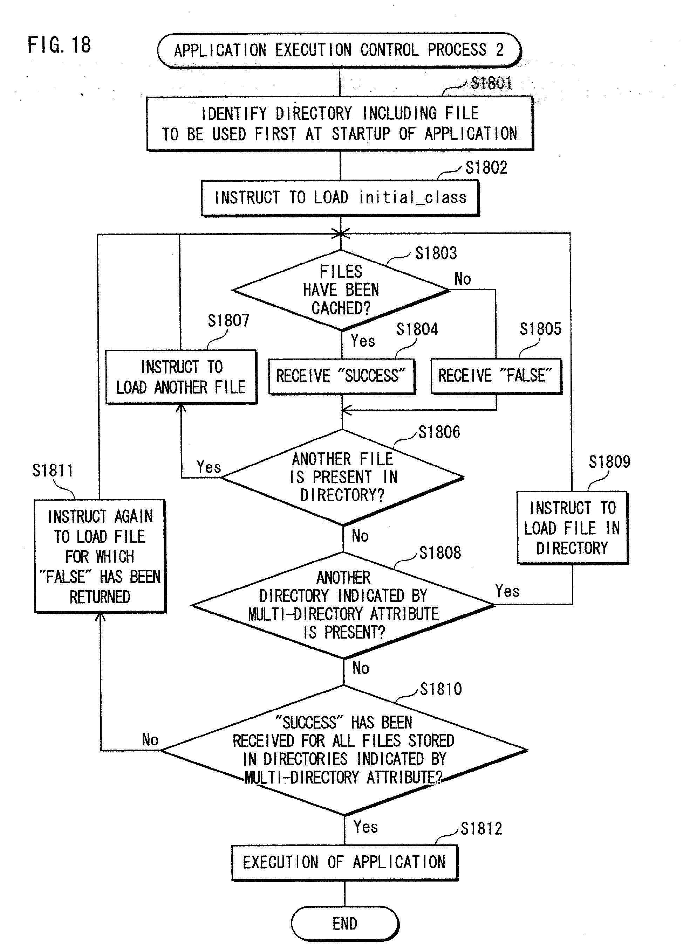

FIG. 18 is a flowchart showing the application execution control process 2 performed by the application managing unit 104b. According to the multi-directory attribute, the application managing unit 104b identifies a directory including a file, among the application constituent files, to be used first at the startup of the application (S1801) . Then, the application managing unit 104b instructs the application executing unit 108 to load a class file corresponding to initial_class in the identified directory (S1802) . It is judged whether the file to be loaded is present in the carousel storing unit 107 (S1803). The application executing unit 108 loads the class file corresponding to initial_class. In the case when the judgment is affirmative, the class file corresponding to initial_class 302 is read to the application executing unit 108, and the application managing unit 104b receives a SUCCESS response from the Java® I/O (S1804). In the case when the judgment is negative, the application managing unit 104b receives a FALSE response from the Java^{®} I/O (S1805). The application managing unit 104b judges whether any class file pertaining to the application is still left in the directory indicated by the multi-directory attribute (S1806). Specifically speaking, the judgment is made based on base_directory 301 and classpath_extension 303 that are application information extracted from the AIT. When the judgment is affirmative, the application management unit 104b instructs the application executing unit 108 to load application constituent files indicated by base_directory 301 or classpath_extension 303 (S1807) , and then moves to Step S1803. When the judgment is negative, the application managing unit 104b judges whether there is another directory indicated by the multi-directory attribute (S1808) . Here, if the judgment is affirmative, the application managing unit 104b instructs the application executing unit 108 to load files in the directory (S1809), and then moves to Step S1803. If the judgment is negative, the application managing unit 104b judges whether to have received a SUCCESS response for all files in the directory indicated by the multi-directory attribute (S1810). If the judgment is negative, the application managing unit 104b once again issues an instruction for loading a class file for which a FALSE response has been returned (S1811). On the other hand, when the judgment is affirmative, the application managing unit 104b instructs the application executing unit 108 to start the application execution. In response to the instruction for starting the application execution, the application executing unit 108 interprets and executes the loaded class files (S1812).

The following concrete explanation is given with reference to FIG. 10, which shows a specific example of File System FS1 to be distributed by an object carousel. Here, in the case when an application of the startup target is Application 1 and the cache guarantee attribute is an attribute indicating the necessity of a guarantee of no failure in file reading, the application control unit 105b sends an instruction for starting the application to the application executing unit 108 after receiving a cache completion notification from the directory-based cache completion monitoring unit 106b. Here, target files for the directory-based cache completion monitoring unit 106b to monitor are limited to File F1 and File FC. In addition, Multi-Directory Attribute MD1 is "/appl"; Multi-Directory Attribute MD2 is "/common". Accordingly, the directory-based cache completion monitoring unit 106b notifies the application control unit 105b of a cache completion notification without waiting for the cache completion of File F2. Herewith, the carousel storing unit 107 becomes able to respond to a request for reading files without performing a cache process of the files. As a result, it is possible to ensure reading of files even when the application executing unit 108 falls into a state of not being able to receive data from the receiving unit 102. Furthermore, by limiting files to be cached, the startup of the application can be speeded up.

On the other hand, in the case where an application of the startup target is Application 1 and the cache guarantee attribute is not an attribute indicating the necessity of a guarantee of no failure in file reading, the application control unit 105a gives an instruction for starting the application to the application executing unit 108 without waiting for a cache completion notification from the cache completion monitoring unit 106. Therefore, the carousel storing unit 107 responds to a request from the application executing unit 108 for reading files as well as possible, while caching yet-to-be cached filed during the time when no file reading requests are made. Accordingly, the startup of the application is made quicker than in the case of waiting for all files in directories indicated by a multi-directory attribute to be cached.

Thus, according to the present embodiment, it is possible to start an application after caching, based on the multi-directory attribute, only files necessary for executing the application, which results in quicker startup of the application.

### EMBODIMENT 4

An application execution apparatus 10c of the present embodiment caches application constituent files distributed after having been divided and assigned to multiple object carousels to thereby cache, in a limited manner, only files necessary for executing an application.

According to the present embodiment, in the digital broadcasting system of FIG. 1, application constituent files are distributed after having been divided and assigned to multiple object carousels. The broadcast program further includes, as its component, an attribute indicating object carousels that include files constituting one application (hereinafter, referred to as the "multi-carousel attribute"), in addition to the components shown in Embodiment 2.
In the present embodiment, assume that the files constituting one application are distributed after having been divided and assigned to two object carousels.

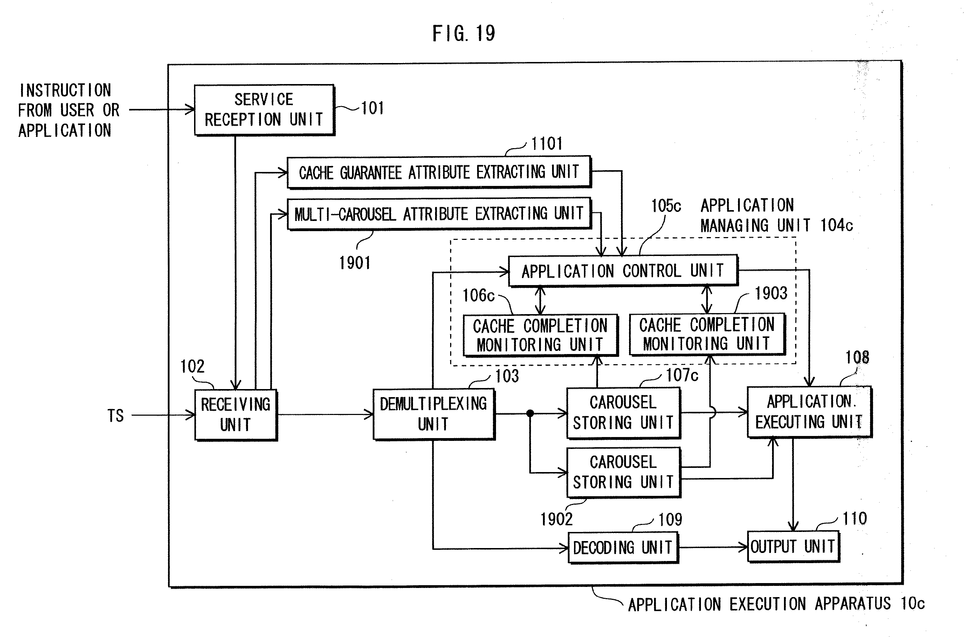

In FIG. 19, the application execution apparatus 10c has a structure in which a multi-carousel attribute extracting unit 1901, along with a carousel storing unit 1902 and a cache completion monitoring unit 1903, is added to the application execution apparatus 10a of Embodiment 2.
The multi-carousel attribute extracting unit 1901 extracts a multi-carousel attribute from an AIT, which is information pertaining to application control in a TS, and offers it to the application control unit 105c.

The carousel storing unit 1902 stores one object carousel included in a selected service in a manner that the object carousel can be referred to as a file system. In response to a request for reading a file from the application executing unit 108, a carousel storing unit provides the file. Here, the carousel storing unit is one of the carousel storing units 1902 and 107, whichever has cached the file requested by the application executing unit 108.

The cache completion monitoring unit 1903 judges whether the entire object carousel has been cached in the carousel storing unit 1902. If the judgment is affirmative, the cache completion monitoring unit 1903 notifies the application control unit 105c of the completion.
In addition, the carousel storing unit 107c of the present embodiment stores the other object carousel included in the selected service in a manner that it can be referred to as a file system.

The cache completion monitoring unit 106c of the present embodiment judges whether the entire object carousel has been cached in the carousel storing unit 107c. If the judgment is affirmative, the cache completion monitoring unit 106c notifies the application control unit 105c of the completion.
The application control unit 105c of the present embodiment extracts information of an application to be started from the AIT of the service specified by the service reception unit 101. When receiving a cache guarantee attribute of an application from the cache guarantee attribute extracting unit 1101, the application control unit 105c judges whether the cache guarantee attribute is an attribute indicating the necessity of a guarantee of no failure in file reading. When the judgment result is affirmative, the application control unit 105c performs authentication of the application and gives an instruction for starting the application execution after receiving cache completion notifications from the cache completion monitoring units 1903 and 106c. When the judgment result is negative, the application control unit 105c gives an instruction for starting the application execution to the application executing unit 108 without waiting for a cache completion notification sent from the cache completion monitoring units 1903 and 106c. The application control unit 105c also sends the extracted application information to the cache completion monitoring units 1903 and 106c.

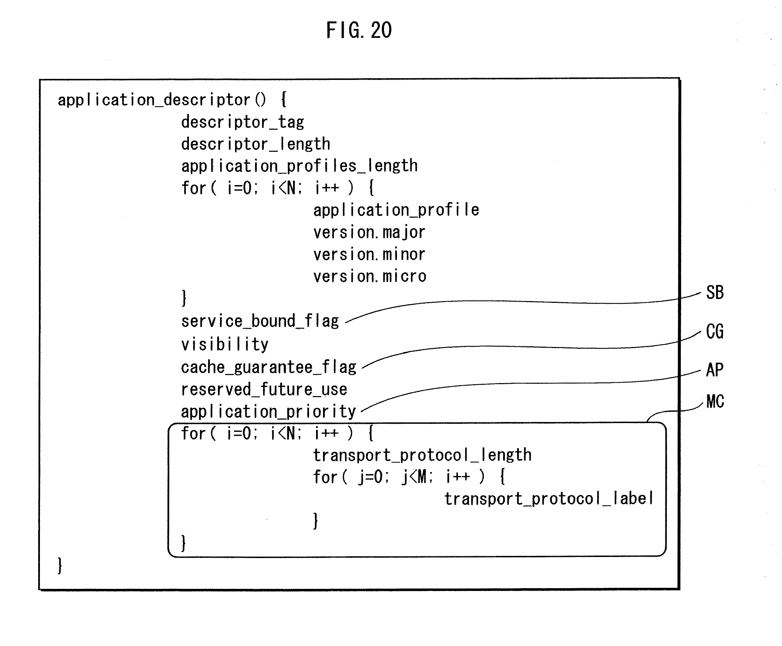

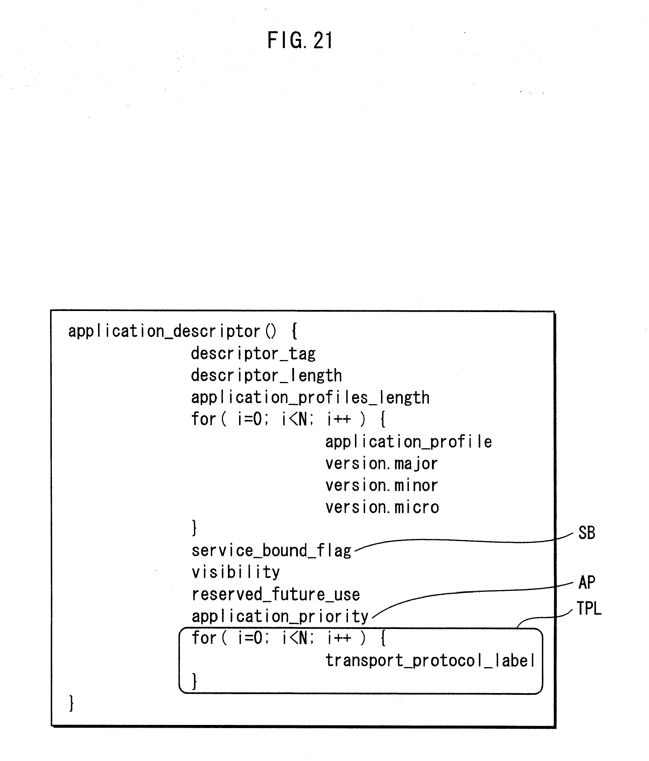

FIG. 20 shows a specific example in which Cache Guarantee Attribute CG and Multi-Carousel Attribute MC are added to the DVB-MHP standard. As shown in FIG. 20, in an AIT of the DVB-MHP, Multi-Carousel Attribute MC is added as an extension of transport_protocol_lable field of application_descriptor defined in the AIT. Cache Guarantee Attribute CG is the same as in Embodiment 2. FIG. 21 shows an example of original application_descriptor defined in an AIT compliant with the DVB-MHP standard. Transport Protocol Label Attribute TPL, which is an original attribute of a part extended for Multi-Carousel Attribute MC can indicate multiple distribution paths. A value of one transport_protocol_lable field indicates an object carousel distributing all application constituent files or "IP via DVB multiprotocol encapsulation." With a for loop, values of multiple transport_protocol_lable fields can be indicated, which enables multiple distribution paths to be indicated. On the other hand, in extended Multi-Carousel Attribute MC of FIG. 20, an additional for loop is added to the for loop capable of indicating multiple distribution paths. This additional for loop indicates one or more object carousels that distribute, within one distribution path, an application which has been divided. Here, like an object carousel, "IP via DVB multiprotocol encapsulation" is a file system distributed in a TS, and is used as means for distributing application constituent files in the DVB-MHP standard.

### <Operations>

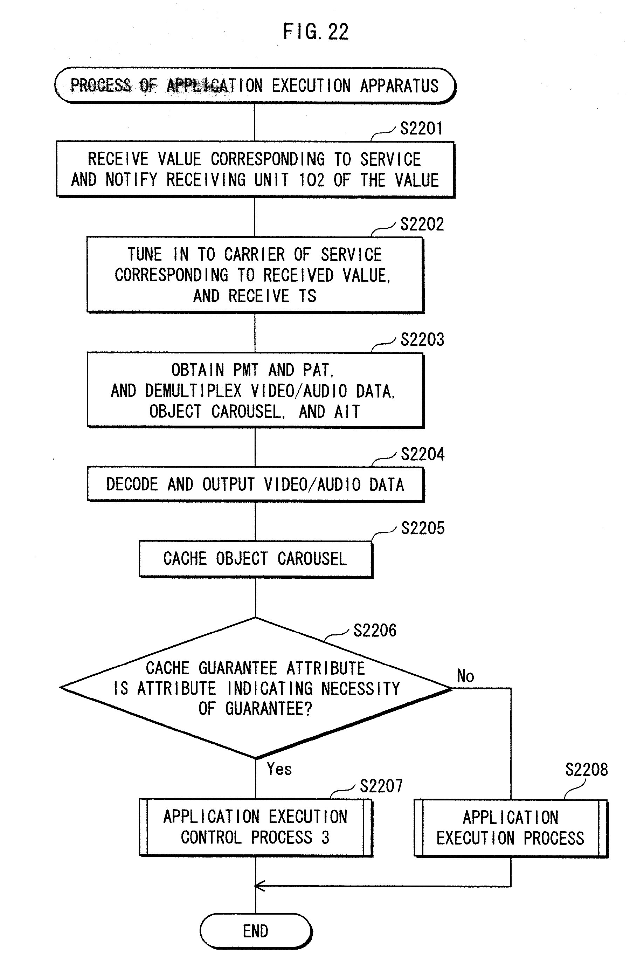

The following describes operations of the application execution apparatus 10c of the present embodiment. FIG. 22 is a flowchart showing a process procedure of the application execution apparatus 10c. First, the service reception unit 101 receives a value corresponding to a service that is specified by a user's operation on the remote controller, a request from the application, or the initial setting at the time when the power is turned on, and notifies the receiving unit 102 of this (S2201) . The receiving unit 102 tunes in to a carrier of the service corresponding to the received value, receives a TS, and then demodulates the received TS into digital data (S2202). The demultiplexing unit 103 obtains the PMT and PAT multiplexed into the TS, identifies the video/audio data, object carousel and AIT using PIDs stored in the PMT, and demultiplexes these (S2203). The decoding unit 109 decodes the video/audio data, and the output unit 110 outputs the decoded data (S2204). The carousel storing units 107 and 1902 cache object carousels pertaining to an application which is a startup target for the selected service. That is, two object carousels are separately cached in the different carousel storing units (S2205). The application managing unit 104c receives a cache guarantee attribute and a multi-carousel attribute from the cache guarantee attribute extracting unit 1101 and the multi-carousel attribute extracting unit 1901, respectively, and then judges whether the cache guarantee attribute is an attribute indicating the necessity of a guarantee of no failure in file reading (S2206). When the judgment is affirmative, the application managing unit 104c performs an application execution control process 3 (S2207). When the judgment is negative, the application managing unit 104c performs the application execution process of FIG. 14 (S2208) . That is, the application control unit 105c gives an instruction for starting the application to the application executing unit 108 without waiting for cache completion notifications sent from the cache completion monitoring units 1903 and 106c.

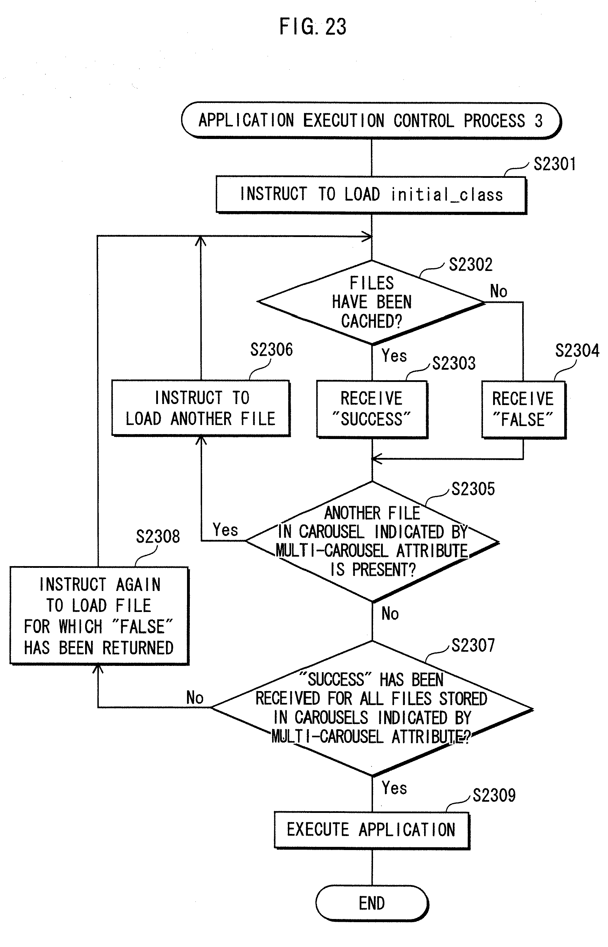

FIG. 23 is a flowchart showing the application execution control process 3 performed by the application managing unit 104c. The application managing unit 104c instructs the application executing unit 108 to load a class file corresponding to initial_class 302, which is application information extracted from the AIT (S2301). It is judged whether the file to be loaded is present in the carousel storing unit 107c or the carousel storing unit 1902 (S2302) . In the case when the judgment is affirmative, the class file corresponding to initial_class 302 is read to the application executing unit 108, and the application managing unit 104c receives a SUCCESS response from the Java® I/O (S2303). In the case when the judgment is negative, the application managing unit 104c receives a FALSE response from the Java^{®} I/O (S2304). The application managing unit 104c judges whether another class file is present in a carousel indicated by the multi-carousel attribute (S2305). Specifically speaking, the judgment is made based on base_directory 301 and classpath_extension 303 that are application information extracted from the AIT. When the judgment is affirmative, the application management unit 104 instructs the application executing unit 108 to load application constituent files indicated by base_directory 301 or classpath_extension 303 (S2306), and then moves to Step S2302. When the judgment is negative, the application managing unit 104c judges whether to have received a SUCCESS response for all files in the carousels indicated by the multi-carousel attribute (S2307) . Here, when the judgment is negative, the application managing unit 104c once again issues an instruction for loading a class file for which a FALSE response has been returned (S2308). On the other hand, when the judgment is affirmative, the application managing unit 104c instructs the application executing unit 108 to start the application execution. In response to the instruction for starting the application execution, the application executing unit 108 interprets and executes the loaded class files (S2309).

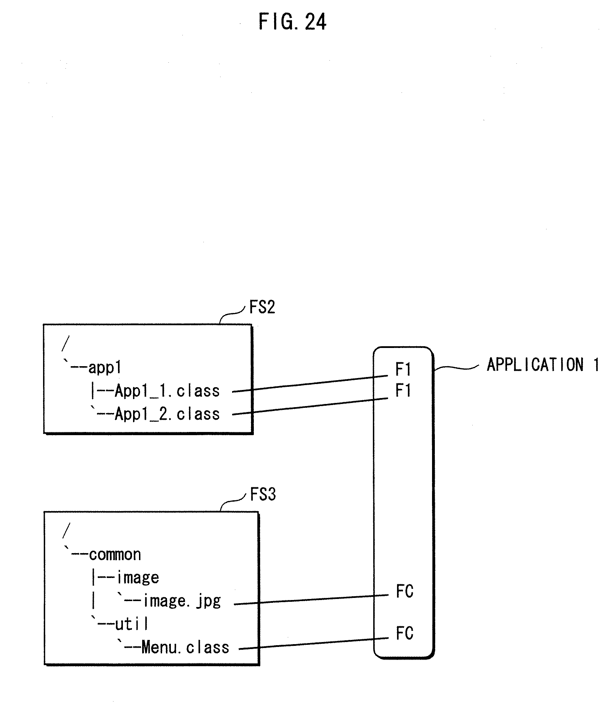

FIG. 24 is a specific example in which File System FS1 is divided and distributed by two object carousels. As shown in FIG. 24, File System FS1 is divided into File Systems FS2 and FS3, which are then transmitted separately. File Systems FS2 and FS3 are stored in the carousel storing units 107c and 1902, respectively. Here, in the case when an application of the startup target is Application 1 and the cache guarantee attribute is an attribute indicating the necessity of a guarantee of no failure in file reading, the application control unit 105c sends an instruction for starting the application to the application executing unit 108 after receiving cache completion notifications from both cache completion monitoring units 106c and 1903. Accordingly, the application execution apparatus 10c does not wait for the cache completion of File F2. Herewith, the carousel storing units 107c and 1902 become able to respond to a request for reading files without performing a cache process of the files. As a result, it is possible to ensure reading of files even when the application executing unit 108 falls into a state of not being able to receive data from the receiving unit 102. Furthermore, by limiting files to be cached, the startup of the application can be speeded up.

On the other hand, in the case where an application of the startup target is Application 1 and the cache guarantee attribute is not an attribute indicating the necessity of a guarantee of no failure in file reading, the application control unit 104c gives an instruction for starting the application to the application executing unit 108 without waiting for cache completion notifications from the cache completion monitoring units 106c and 1903. Therefore, the carousel storing units 107c and 1902 respond to a request from the application executing unit 108 for reading files as well as possible, while caching yet-to-be cached files during the time when no file reading requests are made. Accordingly, the startup of the application is made quicker than in the case of waiting for all files in carousels indicated by a multi-carousel attribute to be cached.

Thus, according to the present embodiment, application constituent files and other files can be respectively assigned to different carousels and transmitted separately. Therefore, it is possible to start the application after caching only files necessary for the application execution, which results in quicker startup of the application.
Note that in the present embodiment the application execution apparatus 10c has two sets of carousel storing units and cache completion monitoring units; however, it may have three or more sets of them.

### <Additional Particulars>

The application execution apparatus of the present invention has been described based on the embodiments; however, it is a matter of course that the present invention is not limited to the embodiment above.

In the above embodiments, the digital broadcasting system comprises one application executing apparatus and one broadcasting apparatus; however, the digital broadcasting system may include two or more of each.
In the above embodiments, the application execution apparatus gives an instruction for starting the execution after caching all application constituent files; however, this instruction may be issued if, among the application constituent files, a file necessary for executing a suspend process in the application end processing is cached. In this case, judgment on whether another file necessary for executing the suspend process is present is made, for example, in S905 of FIG. 9. Then, in S907, a judgment is made on whether a SUCCESS response has been received for, among the application constituent files, all files necessary for executing the suspend process. These judgments are made based on the AIT.

In the above embodiments, each attribute is added to an existing descriptor defined in the AIT; however, a new descriptor may be added to the AIT, or a table other than the AIT may be used.
In the above embodiments, files are transmitted by an object carousel; however, a different distribution method may be employed in which IP via DVB multiprotocol encapsulation, a data carousel, or TCP/IP may be used instead of the object carousel. Alternatively files stored in a DVD, BD, or other type of recording medium may be used. For example, since HD videos are played on a BD, a caching error is caused if seamless playback of HD video is given priority. In addition, a caching error is caused in the case when a BD is taken out from the application execution apparatus. Even in such a case, the end processing can be conducted properly according to the above process.

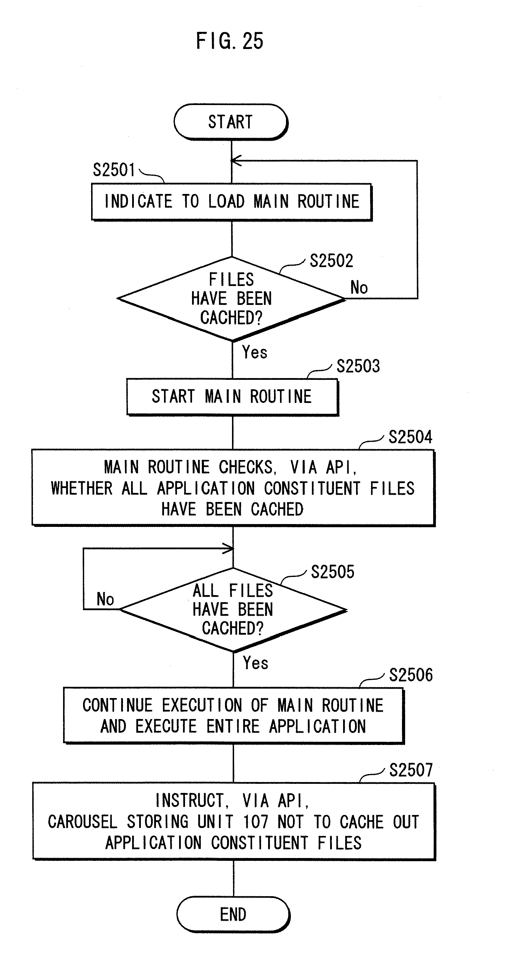

In the above embodiments, the application execution apparatus is used; however, the present invention can be a method including the steps shown in the flowcharts above, and a program including program codes that cause a computer to perform the steps shown in the flowcharts above.
In the above embodiments, the cache completion monitoring unit judges whether all application constituent files have been loaded; however, a cache control API (Application Program Interface) for realizing a process of the same sort may be added. In this case, not the application managing unit but the main routine of the application may implement execution control. FIG. 25 is a flowchart of the execution control performed by the main routine. First, the application managing unit gives an instruction for loading the main routine (S2501). A judgment is made on whether files have been cached (S2502), and they are loaded if the judgment is affirmative. When the main routine of the application is loaded, the application managing unit instructs the application executing unit to start the main routine (S2503). The main routine checks via the API whether all application constituent classes have been loaded (S2504) . The execution is suspended until all the files are cached (S2505) . When all the files have been cached, the execution of the main routine is continued, and the entire application is also executed (S2506). Then, an instruction is issued, via the API, to the carousel storing unit not to cache out the application constituent files (S2507).

### Industrial Applicability

The application program execution apparatus of the present invention can be manufactured and sold operationally, continuously and repeatedly in manufacturing industries. In particular, it is useful as a television with a built-in digital broadcasting receiver and an STB for ground-based broadcasting, satellite broadcasting, or cable digital broadcasting.

## Claims

1. An application program execution apparatus for executing an application program that is executable only in a selected service, comprising:
a cache unit;
a selection receiving unit operable to receive a selection of a service from a user;
a file receiving unit operable to receive, from an object carousel transmitted by a broadcasting apparatus, application constituent files that constitute an application program pertaining to the service selected by the user, and write the application constituent files in the cache unit;
a judgment unit operable to judge whether the cache unit has cached, among the application constituent files, a file required to execute a suspend process; and
an execution control unit operable to cause execution of the application constituent files cached in the cache unit if the judgment is affirmative.

2. The application program execution apparatus of Claim 1, wherein
the execution control unit includes an acquisition subunit operable to acquire cache guarantee attribute information indicating whether a guarantee of no failure in file reading at the execution of the application constituent files is necessary, and
the execution control unit controls the execution when the acquired cache guarantee attribute information indicates that the guarantee is necessary.

3. The application program execution apparatus of Claim 1, wherein
the execution control unit includes an acquisition subunit operable to acquire priority attribute information indicating, in a case where there are a plurality of application programs, to which application program a resource is preferentially allocated, and
the execution control unit controls the execution when the acquired priority attribute information indicates a value of a predetermined threshold or higher.

4. The application program execution apparatus of Claim 1, wherein
the execution control unit
includes an acquisition subunit operable to acquire service bound attribute information indicating whether the application program is executable only in the service selected by the user, and
controls the execution when the acquired service bound attribute information indicates the application program is executable only in the service selected by the user.

5. The application program execution apparatus of Claim 1, wherein
the judgment is made based on information pertaining to all the application constituent files.

6. The application program execution apparatus of Claim 5, wherein
the execution control unit includes an extraction subunit operable to extract, from the information, a directory attribute which has been assigned to each of a plurality of directories and indicates whether a directory to which the directory attribute has been assigned includes one or more of the application constituent files, and
the required file belongs to a directory whose extracted directory attribute indicates that the directory includes one or more of the application constituent files.

7. A computer-readable program for causing a computer to execute a process of executing an application program that is executable only in a selected service, the computer-readable program causing the computer to execute:
a selection receiving code of receiving a selection of a service from a user;
a file receiving code of receiving, from an object carousel transmitted by a broadcasting apparatus, application constituent files that constitute an application program pertaining to the service selected by the user, and writing the application constituent files in the computer;
a judgment code of judging whether the computer has cached, among the application constituent files, a file required to execute a suspend process; and
an execution control code of causing execution of the application constituent files cached in the computer if the judgment is affirmative.

8. An application program execution method for executing an application program that is executable only in a selected service, comprising the steps of:
receiving a selection of a service from a user;
receiving, from an object carousel transmitted by a broadcasting apparatus, application constituent files that constitute an application program pertaining to the service selected by the user, and writing the received application constituent files in a cache memory of a computer;
judging whether the cache memory has cached, among the application constituent files, a file required to execute a suspend process; and
controlling execution of the application constituent files cached in the cache memory if the judgment is affirmative.

9. An application program execution apparatus for executing an application program that is executable only in a selected service, comprising:
a cache unit;
a selection receiving unit operable to receive a selection of a service from a user;
a file receiving unit operable to receive, from an object carousel transmitted by a broadcasting apparatus, application constituent files that constitute an application program pertaining to the service selected by the user, and write the application constituent files in the cache unit; and
an interface unit operable to check whether the cache unit has cached, among the application constituent files, a file required to execute a suspend process, wherein
when a main routine is started, the application program checks via the interface unit whether the cache unit has cached the required file, halts execution of the application constituent files until the required file is cached if a result of the check is negative, and continues the execution when the required file is cached.

10. An application program execution apparatus for executing an application program that is executable only in a predetermined service, comprising:
a cache unit;
a writing unit operable to read, from a recording medium, application constituent files that constitute an application program pertaining to the predetermined service, and write the application constituent files in the cache unit;
a judgment unit operable to judge whether the cache unit has cached, among the application constituent files, a file required to execute a suspend process; and
an execution control unit operable to cause execution of the application constituent files cached in the cache unit if the judgment is affirmative.
